# EUROPEAN PATENT SPECIFICATION

(11) **EP 3 305 550 B1**
(45) Date of publication and mention of the grant of the patent: **17.06.2020**
(21) Application number: 16799858.2
(22) Date of filing: 16.05.2016
(51) Int. Cl.: B60C 9/18, B60C 9/22, B60C 9/00, B60C 9/20, B60C 9/26

(54) **REINFORCEMENT MEMBER FOR TIRES, AND TIRE USING SAME**
VERSTÄRKUNGSELEMENT FÜR REIFEN UND REIFEN MIT VERWENDUNG DAVON
ÉLÉMENT DE RENFORCEMENT POUR PNEUMATIQUE, ET PNEUMATIQUE METTANT EN OEUVRE CELUI-CI

(30) Priority: 25.05.2015 JP 2015105788
(43) Date of publication of application: 11.04.2018
(73) Proprietor: Bridgestone Corporation, Tokyo 104-8340 (JP)
(72) Inventor: MIYAZONO Toshiya, Tokyo 104-8340 (JP)
(74) Representative: Oxley, Robin John George
(86) International application number: PCT/JP2016/064469
(87) International publication number: WO 2016/190152

(56) References cited:
- EP-A1- 2 689 939
- JP-A- S5 322 205
- JP-A- H01 240 305
- JP-A- H04 154 405
- JP-A- H07 315 008
- JP-A- H09 240 213
- JP-A- H10 109 502
- JP-A- H11 180 110
- JP-A- 2004 074 826
- JP-A- 2012 501 276
- US-A1- 2010 282 389

## Description

### TECHNICAL FIELD

The present invention relates to a tire reinforcement member (hereinafter, also simply referred to as "reinforcement member"), and a tire comprising the same. More particularly, the present invention relates to: a tire reinforcement member capable of reducing the weight of a tire while improving or maintaining the durability of the tire as compared to conventional tires; and a tire comprising the same.

### BACKGROUND ART

A variety of studies have been conducted on tire reinforcement members. For example, as the structure of a belt used as a reinforcement member of a tire for passenger vehicles, a structure in which two or more intersecting belt layers whose reinforcing cord directions intersect with each other are arranged on the tire radial direction outer side of a carcass, serving as a skeleton member, in a crown portion is commonly adopted. In addition, as the structure of a belt, a structure is also known in which upper and lower two belt layers are arranged such that their organic fiber cords as reinforcing cords intersect with each other, the organic fiber cords being folded back at the belt layer widthwise ends and configured in a spiral structure in which the organic fiber cords extend from one belt layer to the other, and a steel belt layer in which reinforcing cords composed of steel cords is arranged between the belt layers comprising the organic fiber cords.

As such a structure, for example, Patent Document 1 proposes a pneumatic radial tire in which, by controlling the orientation angle of reinforcing cords of a steel belt layer to be 15° to less than 45° with respect to the tire circumferential direction, not only the high-speed durability, riding conformability and maneuverability are all satisfied but also the weight can be reduced while improving the edge separation resistance of belt layers of the pneumatic tire for passenger vehicles. JP H10-109502 (A) discloses a tire comprising upper and lower belt layers with reinforcement cord configured in a spirally winding structure and a belt layer with steel reinforcing cords interposed between the upper and lower belt layers. JP S53-22205 (A) discloses a tire which includes a reinforcement belt assembly comprising a core spirally wound with a band.

### RELATED ART DOCUMENT

### PATENT DOCUMENT

Patent Document 1: Japanese Unexamined Patent Application Publication No. H10-109503

### SUMMARY OF THE INVENTION

### PROBLEMS TO BE SOLVED BY THE INVENTION

However, in terms of the tire durability against, for example, separation of belt layers caused by repeated input and tire breakage caused by running over an obstacle on the road, the belt structure disclosed in Patent Document 1 may not be necessarily sufficient for a tire that is used under severe conditions in those areas where the temperature is high and road surfaces are not maintained. Therefore, a further improvement is still desired at present.

In view of the above, an object of the present invention is to provide a tire reinforcement member which can improve the tire durability than before, and a tire comprising the same.

### MEANS FOR SOLVING THE PROBLEMS

As a result of intensively studying to solve the above-described problems, the present inventor obtained the following finding. That is, the belt proposed in Patent Document 1 has a structure constituted by three belt layers formed by spirally winding reinforcement members composed of organic fiber cords on a steel belt layer; therefore, there is no problem with regard to separation between the belt layers due to repeated inputs. However, since the angle of the steel cords of the steel belt layer with respect to the tire circumferential direction is small, the tension is high and there is not much room before reaching the breaking strength. Accordingly, the tensile strain of the steel cords is increased due to local deformation caused by inputs from obstacles, as a result of which the steel cords are broken. On the basis of this finding, the present inventor further intensively studied to discover that the above-described problems can be solved by adopting the following reinforcement member structure, thereby completing the present invention.

That is, a tire reinforcement member of the present invention comprises: at least one core material cord layer; and a spiral cord layer comprising reinforcing cords spirally wound on the core material cord layer, wherein reinforcing cords in the core material cord layer are metal cords having an inclination angle of 40° to 90° with respect to the longitudinal direction of the core material cord layer, and the reinforcing cords in the spiral cord layer are organic fiber cords having a modulus of not less than 19 GPa.

The term "modulus" used herein refers to a value of the initial tensile modulus measured in accordance with JIS L1013 at a test temperature of 25°C, a rate of 30 cm/min and a chuck distance of 250 mm.

In the tire reinforcement member of the present invention, it is preferred that the organic fiber cords have an inclination angle of 10° to 45° with respect to the longitudinal direction of the core material cord layer. It is also preferred that the reinforcing cords of the core material cord layer have an inclination angle of 50° to 90°. Further, in a tire of the present invention, the distance between a metal cord at a width direction end of the core material cord layer and a reinforcing cord at a width direction end of the spiral cord layer is 0.2 to 20 times of the diameter of the metal cords of the core material cord layer.

The tire of the present invention is characterized by comprising the tire reinforcement member of the present invention.

The tire of the present invention can be suitably used as a tire for passenger vehicles, a tire for trucks and busses, and a tire for construction vehicles.

### EFFECTS OF THE INVENTION

According to the present invention, a tire reinforcement member which can improve the tire durability than before, and a tire comprising the same can be provided.

### BRIEF DESCRIPTION OF THE DRAWINGS

FIG. 1 is a widthwise cross-sectional view of a tire reinforcement member according to one preferred embodiment of the present invention.
FIG. 2 is a schematic plan view illustrating a reinforcing cord angle of the tire reinforcement member according to one preferred embodiment of the present invention.
FIG. 3 is a tire widthwise cross-sectional view illustrating one example of a constitution of a tire for passenger vehicles.
FIG. 4 is a tire widthwise partial cross-sectional view of a tread portion of a tire for passenger vehicles according to the present invention.
FIG. 5 is a tire widthwise cross-sectional view illustrating one example of a constitution of a tire for trucks and busses.
FIG. 6 is a tire widthwise partial cross-sectional view illustrating a tread portion of a tire for trucks and busses according to the present invention.
FIG. 7 is a tire widthwise cross-sectional view illustrating one example of a constitution of a tire for construction vehicles.
FIG. 8 is a tire widthwise partial cross-sectional view illustrating a tread portion of a tire for construction vehicles according to the present invention.

### MODE FOR CARRYING OUT THE INVENTION

The tire reinforcement member of the present invention will now be described in detail referring to the drawings.

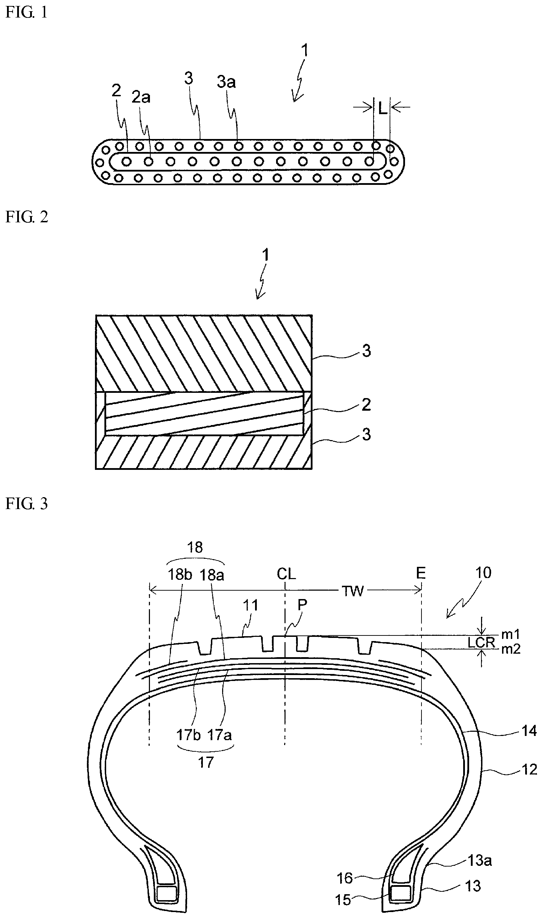

FIG. 1 is a widthwise cross-sectional view of a tire reinforcement member according to one preferred embodiment of the present invention, and FIG. 2 is a schematic plan view illustrating a reinforcing cord angle of the tire reinforcement member according to one preferred embodiment of the present invention. A tire reinforcement member 1 of the present invention comprises: at least one core material cord layer 2; and a spiral cord layer 3 comprising reinforcing cords spirally wound on the core material cord layer 2. The core material cord layer 2 and the spiral cord layer 3 are each produced by parallelly aligning a large number of reinforcing cords and then arranging an unvulcanized rubber on top and bottom thereof to coat the reinforcing cords with the rubber. The illustrated tire reinforcement member of the present invention has a single core material cord layer 2; however, the core material cord layer 2 may be arranged in a plural number.

In the reinforcement member 1 of the present invention, the reinforcing cords in the core material cord layer 2 are metal cords 2a, and the metal cords 2a have an inclination angle of 40° to 90° with respect to the longitudinal direction of the core material cord layer 2. By controlling the angle of the metal cords 2a in this range, the tension of the metal cords 2a is reduced, and a margin before reaching the breakage point of the metal cords 2a is increased. This consequently makes the metal cords 2a unlikely to be broken even when a force is input thereto from an obstacle. In order to favorably attain this effect, the inclination angle of the metal cords 2a of the core material cord layer 2 is preferably 50° to 90°. In cases where plural core material cord layers are arranged, these core material cord layers may constitute intersecting belt layers.

Further, in the reinforcement member 1 of the present invention, reinforcing cords 3a in the spiral cord layer 3 are organic fiber cords having a modulus of not less than 19 GPa. Since the metal cords 2a of the core material cord layer 2 have an angle of 40° to 90° with respect to the longitudinal direction of the core material cord layer 2, the rigidity of the core material cord layer 2 in the longitudinal direction is not necessarily sufficient. Thus, such insufficient rigidity in the longitudinal direction is compensated by using organic fiber cords having a modulus of not less than 19 GPa as the reinforcing cords 3a in the spiral cord layer 3. The modulus of the organic fiber cords is preferably 26 GPa to 180 GPa. The organic fiber cords to be used preferably have a lower specific gravity than that of the metal cords 2a used in the core material cord layer 2. This enables to reduce the weight as compared to a case where steel cords are used.

Examples of the organic fiber cords having a modulus of not less than 19 GPa include cords composed of aromatic polyamide fibers (e.g., trade name "Kevlar®"), polyketone (PK) fibers, or carbon fibers. In carbon fiber cords having a modulus of not less than 19 GPa, for example, the carbon fibers are not particularly restricted, and examples of the carbon fiber cords include those composed of polyacrylonitrile (PAN)-based carbon fibers, pitch-based carbon fibers, or rayon-based carbon fibers. It is preferred that the organic fiber cords be subjected to an adhesive treatment so as to improve the adhesion with rubber. This adhesive treatment can be performed in accordance with a conventional method.

In the reinforcement member 1 of the present invention, as described above, since the rigidity of the core material cord layer 2 in the longitudinal direction is not high, the core material cord layer 2 is likely to elongate in the longitudinal direction. However, considering the reinforcement member 1 as a whole, Poisson deformation of the spiral cord layer 3 (deformation in which the spiral cord layer 3 elongates in the longitudinal direction by 1 while shrinking in the width direction by 7, which deformation is caused by symmetrical intersecting layers) is inhibited by the core material cord layer 2. That is, in the reinforcement member 1 of the present invention, since the metal cords 2a of the core material cord layer 2 have an angle of 40° to 90° with respect to the longitudinal direction, the core material cord layer 2 functions as a tension rod against shrinking deformation in the width direction caused by Poisson deformation. As a result, elongation of the reinforcement member 1 in the longitudinal direction is inhibited, and the rigidity in the longitudinal direction is thus improved. In addition, with the Poisson deformation being inhibited, not only the rigidity in the longitudinal direction is improved but also shrinking deformation in the width direction is inhibited at the same time; therefore, the rigidity in the width direction is improved as well. In the above-described manner, one or more pairs of reinforcing layers intersecting at a low angle with respect to the tire circumferential direction elongate in the circumferential direction with application of an internal pressure and, in association therewith, shrink in the tire width direction. Inhibition of this shrinking deformation in the tire width direction by arranging reinforcing layers at a large angle is hereinafter referred to as "tension rod effect".

In the reinforcement member 1 of the present invention, it is preferred that the organic fiber cords (reinforcing cords 3a) of the spiral cord layer 3 have an inclination angle of 10° to 45° with respect to the longitudinal direction of the core material cord layer 2. By adopting this constitution, elongation of the reinforcement member 1 in the longitudinal direction can be further inhibited. The inclination angle is more preferably 15° to 30°.

In the reinforcement member 1 of the present invention, the distance (L) between a metal cord 2a at a width direction end of the core material cord layer 2 and a reinforcing cord 3a at a width direction end of the spiral cord layer 3 is 0.2 to 20 times of the diameter of the metal cords 2a of the core material cord layer 2. By controlling the distance (L) in the width direction of the reinforcement member between the cut end of the metal cords 2a constituting the core material cord layer 2 and the spirally wound reinforcing cords 3a constituting the spiral cord layer 3 to be 0.2 to 20 times of the diameter of the metal cords 2a constituting the core material cord layer 2, a reduction in durability due to cracking from the cut end of the metal cords 2a can be inhibited while maintaining the effect of the core material cord layer 2 as a tension rod. In addition, since a sufficient amount of a rubber exists between the cords, the rigidity of the reinforcement member 1 in the width direction can be further improved.

In the reinforcement member 1 of the present invention, generally, the end count of the metal cords 2a in the core material cord layer 2 is preferably in a range of 10 to 60 cords/50 mm. By controlling the end count in this range, the tension rod effect can be favorably attained; however, in the reinforcement member 1 of the present invention, the end count is not restricted to this range. Generally, the end count of the reinforcing cords 3a in the spiral cord layer 3 is also preferably in a range of 10 to 60 cords/50 mm; however, it is not restricted to this range. The spiral cord layer 3 is formed by spirally winding the reinforcing cords 3a coated with a rubber on the core material cord layer 2 and, in the process of spirally winding the reinforcing cords 3a on the core material cord layer 2, individual reinforcing cords 3a may be wound sequentially, or a plurality of the reinforcing cords 3a in a strip form may be wound.

The reinforcement member 1 of the present invention can be suitably used as a reinforcement member of a tire for passenger vehicles, a tire for trucks and busses, a tire for construction vehicles, a tire for two-wheeled vehicles, a tire for airplanes, and a tire for agriculture. Further, the tire is not restricted to a pneumatic tire, and the reinforcement member can also be used as a reinforcement member of a solid tire or a non-pneumatic tire. The part to which the reinforcement member 1 of the present invention is applied is not particularly restricted. For example, the reinforcement member 1 of the present invention is preferably applied as a belt that covers the majority of the tread portion. In the reinforcement member 1 of the present invention, as described above, not only the rigidity in the longitudinal direction but also the rigidity in the width direction are improved at the same time. Therefore, by using the reinforcement member 1 of the present invention as a belt, in addition to inhibition of interlayer separation of the belt caused by repeated inputs and inhibition of cord breakage caused by driving over an obstacle on the road, cracking in a groove bottom due to the groove bottom strain as well as change over time can be inhibited owing to reduction of the groove bottom strain at the time of applying an internal pressure, so that the wear rate of the tire can be reduced and partial wear of the tire can be inhibited.

In addition to the use as a belt, for example, the reinforcement member 1 of the present invention may also be used only for local reinforcement of a part of the tread. The reinforcement member 1 of the present invention can be used only for local reinforcement of, for example, the vicinity of the tread ends, the vicinity of the equatorial plane, or the vicinity of the groove bottom. The reinforcement member of the present invention may be used alone, or a plurality of the reinforcement members may be arranged side by side along the tire width direction or configured to cover the tread portion by spirally winding the reinforcement members in the circumferential direction while shifting them from one another in the tire width direction.

In the reinforcement member 1 of the present invention, what is important is only that the core material cord layer 2 and the spiral cord layer 3 spirally wound thereon have the above-described constitutions, and other constitutions are not particularly restricted. As the metal cords 2a used in the core material cord layer 2, the rubber used for coating the metal cords 2a and the reinforcing cords 3a of the spiral cord layer 3 and the like, ones that are conventionally known can be used.

As the metal cords 2a of the core material cord layer 2, from the standpoints of cost and strength, it is particularly preferred to use steel filaments or steel cords obtained by twisting plural steel filaments together. Particularly, in order to favorably attain the tension rod effect, the compression rigidity in the width direction is preferably high. Therefore, twisted cords are more preferably used than monofilament cords. Various designs can be adopted for the twist structure of the steel cords, and various cross-sectional structures, twist pitches, twist directions and distances between adjacent filaments can be applied to the steel cords. As the cross-sectional structure, various twist structures such as single twist, layer twist and multi-twist can be adopted, and cords having a flat cross-sectional shape can be used as well. Further, cords obtained by twisting together filaments of different materials can also be used. The steel filaments constituting the steel cords contain iron as a main component and may also contain various trace elements, such as carbon, manganese, silicon, phosphorus, sulfur, copper and chromium. Moreover, on the surface of the steel filaments, brass plating may be applied for improvement of the adhesion with rubber.

A rubber composition used for coating the core material cord layer and the spiral cord layer is not particularly restricted. For example, as a rubber contained in the rubber composition used as a coating rubber, any known rubber can be used, and examples thereof include natural rubbers, and synthetic rubbers such as vinyl aromatic hydrocarbon-conjugated diene copolymers, polyisoprene rubber, butadiene rubber, butyl rubber, halogenated butyl rubber, and ethylene-propylene rubber. These rubber components may be used individually, or two or more thereof may be used in combination. From the standpoints of the characteristics of adhesion with the metal cords and the fracture characteristics of the rubber composition, the rubber component is preferably one composed of at least either a natural rubber or a polyisoprene rubber, or one which comprises a natural rubber in an amount of not less than 50% by mass and the remainder is composed of a synthetic rubber.

In the rubber composition used as the coating rubber of the reinforcement member of the present invention, an additive(s) normally used in the rubber industry, examples of which include fillers (e.g., carbon black and silica), softening agents (e.g., aromatic oil), methylene donors (e.g., methoxymethylated melamines, such as hexamethylenetetramine, pentamethoxymethylmelamine and hexamethylene methylmelamine), vulcanization accelerators, vulcanization aids and age resistors, can be incorporated as appropriate in an ordinary amount. The method of preparing the rubber composition used as the coating rubber of the reinforcement member of the present invention is not particularly restricted and, for example, the above-described compounds or a mixture thereof, sulfur, an organic acid cobalt salt and various additives can be kneaded into a rubber component using a Banbury mixer, a roll or the like.

Next, the tire of the present invention will be described.

The tire of the present invention comprises the reinforcement member 1 of the present invention, and examples thereof include tires for passenger vehicles, trucks and busses, construction vehicles, two-wheeled vehicles, airplanes, or agriculture. The tire of the present invention is preferably a tire for passenger vehicles, a tire for trucks and busses, or a tire for construction vehicles. The tire of the present invention is not restricted to a pneumatic tire and can also be used as a solid tire or a non-pneumatic tire.

The part to which the reinforcement member 1 of the present invention is applied is not particularly restricted and, as described above, for example, the reinforcement member 1 of the present invention is suitable as a belt that covers the majority of the tread portion. By using the reinforcement member of the present invention as a belt, cracking that occurs on the groove bottom due to the groove bottom strain as well as change over time can be inhibited owing to reduction of the groove bottom strain at the time of applying an internal pressure, so that the wear rate of the tire can be reduced and partial wear of the tire can be inhibited. In addition, for example, the reinforcement member 1 of the present invention may also be used only for local reinforcement of a part of the tread. The reinforcement member 1 of the present invention can be used only for local reinforcement of, for example, the vicinity of the tread ends, the vicinity of the equatorial plane, or the vicinity of the groove bottom. The reinforcement member 1 may be used alone, or a plurality of the reinforcement members 1 may be arranged side by side along the tire width direction or configured to cover the tread portion by spirally winding the reinforcement members 1 in the circumferential direction while shifting them from one another in the tire width direction.

FIG. 3 is a tire widthwise cross-sectional view illustrating one example of a constitution of a tire for passenger vehicles. The illustrated tire for passenger vehicles 10 comprises: a tread portion 11 forming a ground contact part; a pair of side wall portions 12 continuously extending inward in the tire radial direction on both sides of the tread portion 11; and bead portions 13 continuously extending on the circumferential inner side of each side wall portion 12. The tread portion 11, the side wall portions 12 and the bead portions 13 are reinforced by a carcass 14 composed of a single carcass ply toroidally extending from one bead portion 13 to the other bead portion 13. In the illustrated tire for passenger vehicles 10, bead cores 15 are each embedded in the pair of the bead portions 13, and the carcass 14 is folded around the bead cores 15 from the inside to the outside of the tire and thereby anchored.

In the tire for passenger vehicles 10 of the present invention, a variety of constitutions including conventional structures can be adopted for the carcass 14, and the carcass 14 may have a radial structure or a bias structure. The carcass 14 is preferably constituted by one or two carcass plys each composed of an organic fiber cord layer. Further, the carcass 14 may have its maximum width positions in the tire radial direction on either side closer to each bead portion 13 or closer to the tread portion 11. For example, the maximum width positions of the carcass 14 can be arranged in a range of 50% to 90% from the bead base on the tire radial direction outer side with respect to the tire height. Moreover, as illustrated, the carcass 14 generally and preferably has a structure in which the carcass 14 extends between the pair of the bead cores 15 without interruption; however, the carcass 14 can also be constituted by a pair of carcass ply pieces that extend from the respective bead cores 15 and are interrupted in the vicinity of the tread portion 11 (not illustrated).

A variety of structures can be adopted for the folded parts of the carcass 14. For example, the folded ends of the carcass 14 can be positioned on the tire radial direction inner side than the upper ends of bead fillers 16, and the folded ends of the carcass 14 may extend further on the tire radial direction outer side than the upper ends of the bead fillers 16 or the tire maximum width positions. In this case, the folded ends of the carcass 14 may also extend to the tire width direction inner side than the tire width direction ends of a belt 17. Further, in cases where plural carcass plys are arranged, the positions of the folded ends of the carcass 14 in the tire radial direction may be different from each other. Alternatively, the carcass 14 can also take a structure in which the carcass 14 is sandwiched by plural bead core members in the absence of the folded parts, or a structure in which the carcass 14 is wound around the bead cores 15. The end count of the carcass 14 is generally in a range of 10 to 60 cords/50 mm; however, the end count is not restricted thereto.

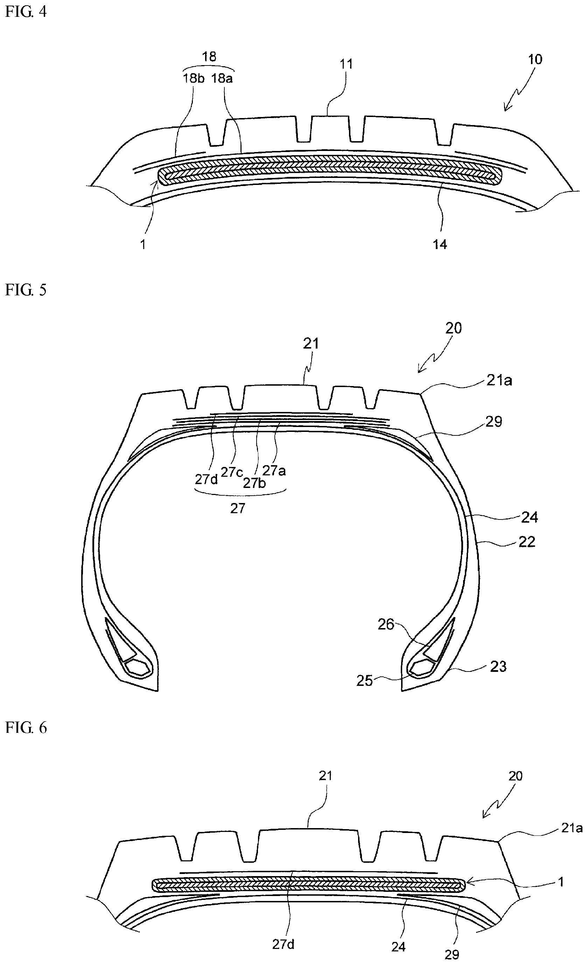

In the illustrated tire for passenger vehicles 10, the belt 17 composed of two belt layers 17a and 17b is arranged on the tire radial direction outer side of the carcass 14 in the crown region. In the present invention, the reinforcement member 1 can be arranged in place of the belt 17 composed of the two belt layers 17a and 17b. FIG. 4 is a tire widthwise partial cross-sectional view illustrating a tread portion of a tire for passenger vehicles according to the present invention. In the illustrated tire, three reinforcing layers according to the reinforcement member 1 of the present invention are arranged in place of the two belt layers 17a and 17b. That is, the spiral cord layer 3 of the reinforcement member 1 of the present invention constitutes intersecting belt layers in which cord layers each having a prescribed angle with respect to the tire circumferential direction intersect with each other between the layers. Further, the core material cord layer 2 constitutes a second belt layer.

The tire for passenger vehicles 10 of the present invention may further comprise other belt layers (not illustrated) in addition to the belt layers composed of the reinforcement member 1 of the present invention. Such other belt layers can be inclined belts, each composed of a rubberized layer of reinforcing cords, having a prescribed angle with respect to the tire circumferential direction. The other belt layers may be arranged on the tire radial direction outer side or inner side of the belt layer 1. As the reinforcing cords of the inclined belt layers, it is most common to use, for example, metal cords, particularly steel cords; however, organic fiber cords may be used as well. As the steel cords, cords, composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. An inclination angle of the reinforcing cords of the other belt layers is preferably 10° or larger with respect to the tire circumferential direction. Moreover, in cases where such other belt layers are arranged, the width of a maximum width inclined belt layer having the largest width is preferably 90% to 115%, particularly preferably 100% to 105%, of the tread width.

In the tire for passenger vehicles according to the present invention, a belt reinforcing layer 18 may also be arranged on the tire radial direction outer side of the reinforcement member 1 of the present invention. Examples of the belt reinforcing layer 18 include a cap layer 18a arranged over the entire width or more of the reinforcement member 1 and a layered layer 18b arranged in the regions covering both ends of the reinforcement member 1. The cap layer 18a and the layered layer 18b may each be arranged alone, or both of them may be arranged in combination. Further, two or more cap layers and/or two or more layered layers may be arranged in combination.

Various materials can be used as the reinforcing cords of the cap layer 18a and the layered layer 18b, and representative examples thereof include rayon, nylon, polyethylene naphthalate (PEN), polyethylene terephthalate (PET), aramid, glass fibers, carbon fibers, and steel. From the standpoint of weight reduction, the reinforcing cords are particularly preferably organic fiber cords. As the reinforcing cords, monofilament cords, cords obtained by twisting plural filaments together, or hybrid cords obtained by twisting filaments of different materials together can be used as well. Further, in order to increase the breaking strength, wavy cords may also be used as the reinforcing cords. Similarly, for example, high-elongation cords having an elongation at break of 4.5% to 5.5% may also be used to increase the breaking strength.

In cases where the cap layer 18a is arranged in the tire for passenger vehicles 10 of the present invention, the width of the cap layer 18a may be wider or narrower than those of the inclined belt layers. For example, the width of the cap layer 18a can be 90% to 110% of the width of the maximum width inclined belt layer having the largest width among the inclined belt layers. The end count of the cap layer and that of the layered layer are generally in a range of 20 to 60 cords/50 mm; however, the end counts are not restricted thereto. For example, the cap layer 18a may be imparted with distributions in the tire width direction in terms of rigidity, material, number of layers, cord density and the like and, for example, the number of layers can be increased only at the tire width direction ends, or only in the central part.

From the production standpoint, it is particularly advantageous to configure the cap layer 18a and the layered layer 18b as spiral layers. In this case, these layers may be formed with strip-form cords in which plural core wires arranged in parallel with each other on a plane are bundled together by a wrapping wire with the parallel arrangement being maintained.

In the case of the tire for passenger vehicles 10 of the present invention having a narrow width and a large diameter, as the shape of the tread portion 11 at a tire widthwise cross-section, when a straight line, parallel to the tire width direction, running through a point (P) on the tread surface in the tire equatorial plane (CL) is defined as "m1", a straight line, parallel to the tire width direction, running through a ground contact end (E) is defined as "m2", the distance between the straight lines m1 and m2 in the tire radial direction is defined as fall height "LCR" and the tread width of the tire is defined as "TW", the ratio LCR/TW is preferably 0.045 or less. By controlling the ratio LCR/TW in this range, the crown portion of the tire is flattened (planarized), so that the ground contact area is increased and the input (pressure) from the road surface is thus relaxed, whereby the deflection rate in the tire radial direction can be reduced and the durability and wear resistance of the tire can be improved. Further, the tread ends are preferably smooth.

The tread pattern may be a full lug pattern, a pattern mainly constituted by rib-like land portions, a block pattern or an asymmetrical pattern, and the tread pattern may have a designated rotation direction.

The full lug pattern may be a pattern that comprising widthwise grooves extending in the tire width direction from the vicinity of the equatorial plane to the ground contact ends and, in this case, the pattern is not required to have a circumferential groove. Such a pattern mainly constituted by lateral grooves is capable of effectively exerting on-snow performance in particular.

The pattern mainly constituted by rib-like land portions is a pattern mainly constituted by rib-like land portions partitioned in the tire width direction by at least one circumferential groove, or by circumferential grooves and tread ends. The term "rib-like land portions" used herein refers to land portions extending in the tire circumferential direction without any lateral groove across the tire width direction; however, the rib-like land portions may have sipes and lateral grooves terminating within each rib-like land portion. Since a radial tire has a high ground contact pressure particularly when used at a high internal pressure, it is believed that the ground contact performance on wet road is improved by increasing the circumferential shear rigidity. The pattern mainly constituted by rib-like land portions can be, for example, a tread pattern consisting of only rib-like land portions in a region of 80% of the tread width centered on the equatorial plane, that is, a pattern having no lateral groove. Such a pattern largely contributes to the drainage performance, particulary to the wet performance in this region.

The block pattern is a pattern comprising block land portions partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in a tire having a designated mounting direction, the tire may have a structure having different negative ratios between the tire halves on the inner side and outer side in the vehicle mounting direction divided by the equatorial plane, or the tire may have a structure having different numbers of circumferential grooves between the tire halves on the inner side and outer side in the vehicle mounting direction divided by the equatorial plane.

The tread rubber is not particularly restricted, and any conventionally used rubber or a foamed rubber can be used. The tread rubber may be constituted by plural rubber layers different from each other in the tire radial direction, and the tread rubber may have, for example, a so-called cap-base structure. As the plural rubber layers, those different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers different from each other in the tire width direction, and the tread rubber may have a so-called divided tread structure. As the plural rubber layers, those different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the vicinity of the shoulder land portions or only the vicinity of the center land portions, may be constituted by a rubber layer(s) different from the surroundings.

In the tire for passenger vehicles 10 of the present invention, a known structure can be adopted also for the side wall portions 12. For example, the tire maximum width positions can be arranged in a range of 50% to 90% from the bead base on the tire radial direction outer side with respect to the tire height. Further, a structure comprising a rim guard may be adopted as well. In the tire for passenger vehicles 10 of the present invention, it is preferred that a recess 13a for connecting with the rim flange is formed.

Moreover, variety of structures, such as a circular shape or a polygonal shape, can be adopted for the bead cores 15. It is noted here that, as described above, the bead portions 13 may have a structure in which the carcass 14 is wound on the bead cores 15, or a structure in which the carcass 14 is sandwiched by plural bead core members. In the illustrated tire for passenger vehicles 10, bead fillers 16 are arranged on the tire radial direction outer side of the respective bead cores 15; however, the bead fillers 16 may be omitted in the tire for passenger vehicles 10 of the present invention.

In the tire for passenger vehicles of the present invention, usually, an inner liner may be arranged in the innermost layer of the tire, although it is not illustrated in the drawing. The inner liner may be constituted by a rubber layer mainly composed of butyl rubber, or a film layer comprising a resin as a main component. Further, although not illustrated in the drawing, a porous member may be arranged and an electrostatic flocking process may be performed on the tire inner surface in order to reduce cavity resonance noise. Moreover, on the tire inner surface, a sealant member for inhibition of air leakage upon puncture of the tire may be arranged as well.

The use of the tire for passenger vehicles 10 is not particularly restricted. The tire can be suitably used as a summer tire, an all-season tire, or a winter tire. It is also possible to use the tire for passenger vehicles 10 as a tire for passenger vehicles having a special structure, such as a side-reinforced run-flat tire having a crescent-shaped reinforcing rubber layer in the side wall portions 12 or a studded tire.

Next, the tire for trucks and busses according to the present invention will be described.

FIG. 5 is a tire widthwise cross-sectional view illustrating one example of a constitution of a tire for trucks and busses. The illustrated tire for trucks and busses 20 comprises: a tread portion 21 forming a ground contact part; a pair of side wall portions 22 continuously extending inward in the tire radial direction on both sides of the tread portion 21; and bead portions 23 continuously extending on the circumferential inner side of each side wall portion 22. The tread portion 21, the side wall portions 22 and the bead portions 23 are reinforced by a carcass 24 composed of a single carcass ply toroidally extending from one bead portion 23 to the other bead portion 23. In the illustrated tire for trucks and busses 20, bead cores 25 are each embedded in the pair of the bead portions 23, and the carcass 24 is folded around the bead cores 25 from the inside to the outside of the tire and thereby anchored.

In the tire for trucks and busses 20 of the present invention, a variety of constitutions including conventional structures can be adopted for the carcass 24, and the carcass 24 may have a radial structure or a bias structure. The carcass 24 is preferably constituted by one or two carcass plys each composed of a steel cord layer. Further, the carcass 24 may have its maximum width positions in the tire radial direction on either side closer to each bead portion 23 or closer to the tread portion 21. For example, the maximum width positions of the carcass 24 can be arranged in a range of 50% to 90% from the bead base on the tire radial direction outer side with respect to the tire height. Moreover, as illustrated, the carcass 24 generally and preferably has a structure in which the carcass 24 extends between the pair of the bead cores 25 without interruption; however, the carcass 24 can also be constituted by a pair of carcass pieces that extend from the respective bead cores 25 and are interrupted in the vicinity of the tread portion 21.

A variety of structures can be adopted for the folded parts of the carcass 24. For example, the folded ends of the carcass 24 can be positioned on the tire radial direction inner side than the upper ends of bead fillers 26, and the carcass folded ends may extend further on the tire radial direction outer side than the upper ends of the bead fillers 26 or the tire maximum width positions. In this case, the folded ends of the carcass 24 may also extend to the tire width direction inner side than the tire width direction ends of a belt 27. Further, in cases where plural carcass plys are arranged, the positions of the folded ends of the carcass 24 in the tire radial direction may be different from each other. Alternatively, the carcass 24 can also take a structure in which the carcass 24 is sandwiched by plural bead core members in the absence of the folded parts, or a structure in which the carcass 24 is wound around the bead cores 25. The end count of the carcass 24 is generally in a range of 10 to 60 cords/50 mm; however, the end count is not restricted thereto.

In the illustrated tire for trucks and busses 20, the belt 27 composed of four belt layers 27a to 27d is arranged on the tire radial direction outer side of the carcass 24 in a crown region. In the tire for trucks and busses 20 of the present invention, the reinforcement member 1 can be arranged in place of, among the four belt layers 27a to 27d, the first belt layer 27a to the third belt layer 27c positioned on the tire radial direction inner side. FIG. 6 is a tire widthwise partial cross-sectional view illustrating the tread portion of the tire for trucks and busses according to the present invention. That is, the spiral cord layer 3 of the reinforcement member 1 of the present invention constitutes the first belt layer 27a and the third belt layer 27c, which are intersecting belts in which cord layers each having a prescribed angle with respect to the tire circumferential direction intersect with each other between the layers. Further, the core material cord layer 2 constitutes the second belt layer 27b.

The tire for trucks and busses 20 of the present invention may further comprise, as illustrated, other belt layers (the fourth belt layer 27d in the illustrated example) in addition to the belt layers composed of the reinforcement member of the present invention. Such other belt layers can be inclined belts which are each composed of a rubberized layer of reinforcing cords and have a prescribed angle with respect to the tire circumferential direction. As the reinforcing cords of the inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 0° or larger with respect to the tire circumferential direction. Moreover, in cases where such other belt layers are arranged, the width of a maximum width inclined belt layer having the largest width is preferably 40% to 115%, particularly preferably 50% to 70%, of the tread width. On the tire radial direction inner side of each end of the belt 27, it is preferred to arrange a belt under cushion rubber 29. By this, the strain and temperature of the ends of the belt 27 are reduced, so that the tire durability can be improved.

Further, in the tire for trucks and busses 20 of the present invention, on the tire radial direction outer side of the reinforcement member 1 of the present invention and other belt layer 27d, a circumferential cord layer (not illustrated) may be arranged as well.

In the tire for trucks and busses 20 of the present invention, a known structure can be adopted also for the side wall portions 22. For example, the tire maximum width positions can be arranged in a range of 50% to 90% from the bead base on the tire radial direction outer side with respect to the tire height. In the tire for trucks and busses 20 of the present invention, it is preferred that, unlike the tire for passenger vehicles, the side wall portions 22 is each formed as a smooth curve having a convex shape in the tire width direction without a recess for connecting with the rim flange.

Moreover, a variety of structures, such as a circular shape or a polygonal shape, can be adopted for the bead cores 25. It is noted here that, as described above, the bead portions 23 may have a structure in which the carcass 24 is wound on the bead cores 25, or a structure in which the carcass 24 is sandwiched by plural bead core members. In the illustrated tire for trucks and busses 20, bead fillers 26 are arranged on the tire radial direction outer side of the respective bead cores 25, and the bead fillers 26 may each be constituted by plural rubber members separated from each other in the tire radial direction.

In the tire for trucks and busses 20 of the present invention, the tread pattern may be a pattern mainly constituted by rib-like land portions, a block pattern or an asymmetrical pattern, and the tread pattern may have a designated rotation direction.

The pattern mainly constituted by rib-like land portions is a pattern mainly constituted by rib-like land portions partitioned in the tire width direction by at least one circumferential groove, or by circumferential grooves and tread ends. The term "rib-like land portions" used herein refers to land portions that extend in the tire circumferential direction without any lateral groove across the tire width direction; however, the rib-like land portions may have sipes and lateral grooves terminating within each rib-like land portion. Since a radial tire has a high ground contact pressure particularly when used at a high internal pressure, it is believed that the ground contact performance on wet road is improved by increasing the circumferential shear rigidity. The pattern mainly constituted by rib-like land portions can be, for example, a tread pattern consisting of only rib-like land portions in a region of 80% of the tread width centered on the equatorial plane, that is, a pattern having no lateral groove. Such a pattern largely contributes to the drainage performance, particulary to the wet performance, in this region.

The block pattern is a pattern comprising block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and outer side in the vehicle mounting direction divided by the equatorial plane, and the tire may be configured to have different numbers of circumferential grooves between the tire halves on the inner side and outer side in the vehicle mounting direction that are divided by the equatorial plane.

The tread rubber is not particularly restricted, and any conventionally used rubber can be used. The tread rubber may be constituted by plural rubber layers that are different from each other in the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers different from each other in the tire width direction, and the tread rubber may have a so-called divided tread structure. As the plural rubber layers, those different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the vicinity of the shoulder land portions or only the vicinity of the center land portions, may be constituted by a rubber layer(s) different from the surroundings. Further, in the tread portion, it is preferred that a corner 21a is formed at each tire width direction end.

Next, the tire for construction vehicles according to the present invention will be described.

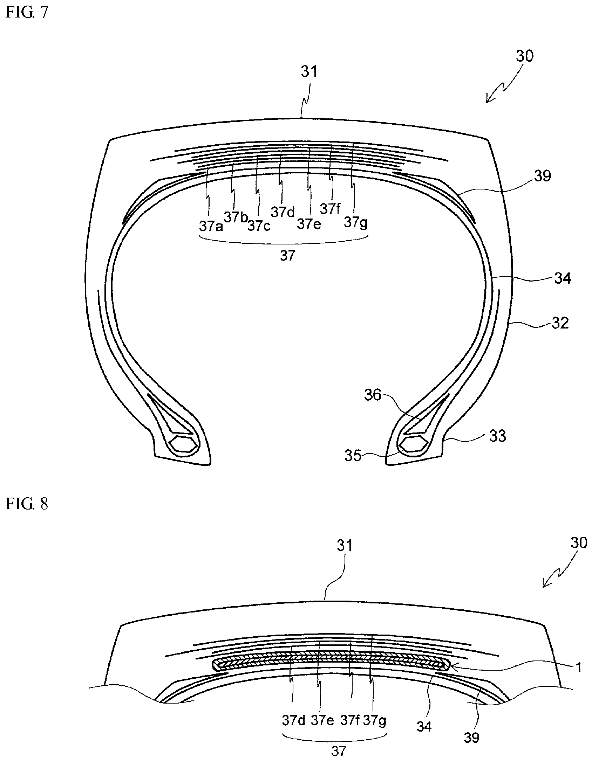

FIG. 7 is a tire widthwise cross-sectional view illustrating one example of a constitution of a tire for construction vehicles. The illustrated tire for construction vehicles 30 comprises: a tread portion 31 forming a ground contact part; a pair of side wall portions 32 continuously extending inward in the tire radial direction on both sides of the tread portion 31; and bead portions 33 continuously extending on the circumferential inner side of each side wall portion 32. The tread portion 31, the side wall portions 32 and the bead portions 33 are reinforced by a carcass 34 composed of a single carcass ply toroidally extending from one bead portion 33 to the other bead portion 33. In the illustrated tire for construction vehicles 30, bead cores 35 are each embedded in the pair of the bead portions 33, and the carcass 34 is folded around the bead cores 35 from the inside to the outside of the tire and thereby anchored.

In the tire for construction vehicles according to the present invention, a variety of constitutions including conventional structures can be adopted for the carcass 34, and the carcass 34 may have a radial structure or a bias structure. The carcass 34 is preferably constituted by one or two carcass plys each composed of a steel cord layer. Further, the carcass 34 may have its maximum width positions in the tire radial direction on either side closer to each bead portion 33 or closer to the tread portion 31. For example, the maximum width positions of the carcass 34 can be arranged in a range of 50% to 90% from the bead base on the tire radial direction outer side with respect to the tire height. Moreover, as illustrated, the carcass 34 generally and preferably has a structure in which the carcass 34 extends between the pair of the bead cores 35 without interruption; however, the carcass 34 can also be constituted by a pair of carcass pieces that extend from the respective bead cores 35 and are interrupted in the vicinity of the tread portion 31.

A variety of structures can be adopted for the folded parts of the carcass 34. For example, the folded ends of the carcass 34 can be positioned on the tire radial direction inner side than the upper ends of bead fillers 36, and the folded ends of the carcass 34 may extend further on the tire radial direction outer side than the upper ends of the bead fillers 36 or the tire maximum width positions. In this case, the folded ends of the carcass 34 may also extend to the tire width direction inner side than the tire width direction ends of a belt 37. Further, in cases where plural carcass plys are arranged, the positions of the folded ends of the carcass 34 in the tire radial direction may be different from each other. Alternatively, the carcass 34 can also take a structure in which the carcass 34 is sandwiched by plural bead core members in the absence of the folded parts, or a structure in which the carcass 34 is wound around the bead cores 35. The end count of the carcass 34 is generally in a range of 10 to 60 cords/50 mm; however, the end count is not restricted thereto.

In the illustrated tire for construction vehicles 30, the belt 37 composed of seven belt layers 37a to 37g is arranged on the tire radial direction outer side of the carcass 34 in a crown region. Generally, a tire for construction vehicles comprises 4 to 6 belt layers and, when the tire for construction vehicles comprises 6 belt layers, the first and the second belt layers constitute an inner intersecting belt layer group; the third and the fourth belt layers constitute a middle intersecting belt layer group; and the fifth and the sixth belt layers constitute an outer intersecting belt layer group. The tire for construction vehicles according to the present invention has a structure in which at least one of the inner, middle and outer intersecting belt layer groups is replaced with the reinforcement member of the present invention.

In the tread width direction, the width of the inner intersecting belt layer group can be 25% to 70% of the width of the tread surface; the width of the middle intersecting belt layer group can be 55% to 90% of the width of the tread surface; and the width of the outer intersecting belt layer group can be 60% to 110% of the width of the tread surface. Further, in the tread planar view, the inclination angle of the belt cords of the inner intersecting belt layer group can be 70° to 85° with respect to the carcass cords; the inclination angle of the belt cords of the middle intersecting belt layer group can be 50° to 75° with respect to the carcass cords; and the inclination angle of the belt cords of the outer intersecting belt layer group can be 70° to 85° with respect to the carcass cords.

FIG. 8 is a tire widthwise partial cross-sectional view illustrating a tread portion of a tire for construction vehicles according to the present invention. In the illustrated tire for construction vehicles 30, the reinforcement member 1 of the present invention is arranged in place of the first belt layer 37a to the third belt layer 37c constituting the inner intersecting belt layer group. That is, the spiral cord layer 3 of the reinforcement member 1 of the present invention is replaced for the first belt layer 37a and the third belt layer 37c forming intersecting belts in which cord layers each having a prescribed angle with respect to the tire circumferential direction intersect with each other between the layers. Further, the core material cord layer 2 is arranged in place of the second belt layer 37b. In the illustrated example, the inner intersecting belt layer group is replaced with the reinforcement member 1 of the present invention; however, the tire for construction vehicles according to the present invention is not restricted thereto. The middle intersecting belt layer group may be replaced with the reinforcement member 1 of the present invention, or the outer intersecting belt layer group may be replaced with the reinforcement member 1 of the present invention. In the case of a tire for construction vehicles comprising 4 belt layers, the first and the second belt layers may be replaced with the reinforcement member of the present invention, or the third and the fourth belt layers may be replaced with the reinforcement member of the present invention.

The tire for construction vehicles 30 of the present invention may further comprise, as illustrated, other belt layers (the fourth to the seventh belt layers) in addition to the belt layers composed of the reinforcement member 1 of the present invention. Such other belt layers can be inclined belts each composed of a rubberized layer of reinforcing cords and have a prescribed angle with respect to the tire circumferential direction. As the reinforcing cords of the inclined belt layers, it is most common to use, for example, metal cords, particularly steel cords; however, organic fiber cords may be used as well. As the steel cords, cords composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 10° or larger with respect to the tire circumferential direction. Moreover, in cases where such other belt layers are arranged, the width of a maximum width inclined belt layer having the largest width is preferably 90% to 115%, particularly preferably 100% to 105%, of the tread width. On the tire radial direction inner side of each end of the belt 37, it is preferred to arrange a belt under cushion rubber 39. By this, the strain and temperature of the ends of the belt 37 are reduced, so that the tire durability can be improved.

In the tire for construction vehicles 30 of the present invention, a known structure can be adopted also for the side wall portions 32. For example, the tire maximum width positions can be arranged in a range of 50% to 90% from the bead base on the tire radial direction outer side with respect to the tire height. In the tire for construction vehicles 30 of the present invention, it is preferred that a recess for connecting with the rim flange is formed.

Moreover, a variety of structures, such as a circular shape or a polygonal shape, can be adopted for the bead cores 35. It is noted here that, as described above, the bead portions 33 may have a structure in which the carcass 34 is wound on the bead cores 35, or a structure in which the carcass 34 is sandwiched by plural bead core members. In the illustrated tire for construction vehicles 30, bead fillers 36 are arranged on the tire radial direction outer side of the respective bead cores 35, and the bead fillers 36 may each be constituted by plural rubber members separated from each other in the tire radial direction.

In the tire for construction vehicles 30 of the present invention, the tread pattern may be a lug pattern, a block pattern or an asymmetrical pattern, and the tread pattern may have a designated rotation direction.

The lug pattern may be a pattern that comprises widthwise grooves extending in the tire width direction from the vicinity of the equatorial plane to the ground contact ends and, in this case, the pattern is not required to have a circumferential groove.

The block pattern is a pattern comprising block land portions partitioned by circumferential grooves and widthwise grooves. Particularly, in the case of a tire for construction vehicles, the blocks are preferably large from the durability standpoint and, for example, the width of each block measured in the tire width direction is preferably 25% to 50% of the tread width.

The asymmetrical pattern is a pattern in which tread patterns on each side of the equatorial plane are asymmetrical. For example, in the case of a tire having a designated mounting direction, the negative ratio may be different between the tire halves on the inner side and outer side in the vehicle mounting direction divided by the equatorial plane, and the tire may be configured to have different numbers of circumferential grooves between the tire halves on the inner side and outer side in the vehicle mounting direction divided by the equatorial plane.

The tread rubber is not particularly restricted, and any conventionally used rubber can be used. The tread rubber may be constituted by plural rubber layers that are different from each other in the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers different from each other in the tire width direction, and the tread rubber may have a so-called divided tread structure. As the plural rubber layers, those different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the vicinity of the shoulder land portions or only the vicinity of the center land portions, may be constituted by a rubber layer(s) different from the surroundings.

For construction vehicles, the thicker the rubber gauge of the tread portion 31, the more preferred it is from the durability standpoint, and the rubber gauge of the tread portion 31 is preferably 1.5% to 4%, more preferably 2% to 3%, of the tire outer diameter. Further, the ratio of the groove area with respect to the ground contact surface of the tread portion 31 (negative ratio) is preferably not higher than 20%. The reason for this is because the tire for construction vehicles 30 is primarily used at low speed in dry areas and, therefore, it is not necessary to have a high negative ratio for drainage performance. As for the size of the tire for construction vehicles, for example, the rim diameter is not less than 20 inches, particularly not less than 40 inches for a large-size tire.

### EXAMPLES

The present invention will now be described in more detail by way of examples thereof.

### <Examples 1 to 10 and Comparative Example>

Reinforcement members of Examples were each prepared by winding a spiral cord layer on a single core material cord layer. As the reinforcing cords of the core material cord layer, steel cords having a 1×3 structure composed of steel filaments of 0.33 mm in diameter were used. Further, as the reinforcing cords of the spiral cord layer, carbon fiber cords or aramid cords were used. The inclination angle of the steel cords of the core material cord layer with respect to the longitudinal direction of each reinforcement member was as shown in Table 1, and the carbon fiber cords of the spiral cord layer had an inclination angle of 20° with respect to the longitudinal direction of each reinforcement member. The end count of the core material cord layer and that of the spiral cord layer were 34 cords/50 mm.

For the thus obtained reinforcement members, the tensile rigidity in the longitudinal direction and the tension applied to the core material cords were evaluated by the following procedures.

### <Tensile Rigidity>

The tensile rigidity was measured by chucking each of the thus prepared reinforcement members on a tensile tester such that the longitudinal direction thereof is aligned with the tensile axis, drawing the reinforcement member at a rate of 10 mm/min and then measuring the displacement at a gauge length of 50 mm in the center between the upper and lower chucks. The thus obtained results were indicated by index values, taking the value of Comparative Example as 100. A larger index value means higher tensile rigidity. The results are shown in Table 1.

### <Tension Applied to Metal Cords of Core Material Cord Layer>

Prior to tire production, a strain gauge was pasted to a spot of the subject cords where a protrusion was to be pressed against, and a tire was then carefully produced. In a laboratory test, the strain was measured by the strain gauge for comparison in a condition where the tire was placed on the protrusion at normal internal pressure and load.

**[Table 1]**

| | Angle of core material cord layer (°) | Tensile rigidity (index) | Tension applied to core material cord layer (index) | Cord modulus (GPa) |
|---|---|---|---|---|
| Example 1 | 40 | 98 | 88 | 19 |
| Example 2 | 50 | 99 | 74 | 84 |
| Example 3 | 55 | 100 | 60 | 150 |
| Example 4 | 60 | 102 | 57 | 56 |
| Example 5 | 65 | 103 | 45 | 180 |
| Example 6 | 70 | 104 | 39 | 32 |
| Example 7 | 75 | 105 | 25 | 120 |
| Example 8 | 80 | 106 | 20 | 63 |
| Example 9 | 83 | 106 | 10 | 40 |
| Example 10 | 90 | 106 | 0 | 106 |
| Comparative Example | 30 | 100 | 100 | 110 |

According to the results shown above, the reinforcement member of the present invention has higher tensile rigidity in the longitudinal direction than conventional reinforcement members, and the tension applied to the metal cords of the core material cord layer is small. Since the tension applied to the metal cords is small, by applying the reinforcement member of the present invention to a tire, the tension acting at the time of inflating the tire can be reduced. Therefore, the durability of the tire upon running over a projection or the like can be improved.

### DESCRIPTION OF SYMBOLS

1: tire reinforcement member (reinforcement member)
2: core material cord layer
2a: metal cord
3: spiral cord layer
3a: reinforcing cord
10: tire for passenger vehicles
11, 21, 31: tread portion
12, 22, 32: side wall portion
13, 23, 33: bead portion
13a: recess
14, 24, 34: carcass
15, 25, 35: bead core
16, 26, 36: bead filler
17, 27, 37: belt
17a, 17b, 27a to 27d, 37a to 37g: belt layer
18: belt reinforcing layer
18a: cap layer
18b: layered layer
20: tire for trucks and busses
21a: corner
29, 39: belt under cushion rubber
30: tire for construction vehicles

## Claims

1. A tire reinforcement member (1) comprising:
at least one core material cord layer (2); and
a spiral cord layer (3) having reinforcing cords (3a) spirally wound on said core material cord layer (2), wherein
reinforcing cords in said core material cord layer (2) are metal cords (2a) having an inclination angle of 40° to 90° with respect to the longitudinal direction of said core material cord layer (2), and
said reinforcing cords (3a) in said spiral cord layer (3) are organic fiber cords having a modulus of not less than 19 GPa,
wherein the distance (L) between a metal cord (2a) at a width direction end of said core material cord layer (2) and a reinforcing cord (3a) at a width direction end of said spiral cord layer (3) is 0.2 to 20 times of the diameter of said metal cords (2a) of said core material cord layer (2), and
wherein the modulus is a value of the initial tensile modulus measured in accordance with JIS L1013 at a test temperature of 25°C, a rate of 30 cm/min and a chuck distance of 250 mm.

2. The tire reinforcement member according to claim 1, wherein said organic fiber cords (3a) have an inclination angle of 10° to 45° with respect to the longitudinal direction of said core material cord layer (2).

3. The tire reinforcement member according to claim 1, wherein said reinforcing cords (2a) of said core material cord layer (2) have an inclination angle of 50° to 90°.

4. A tire (10) comprising the tire reinforcement member (1) according to claim 1.

5. The tire according to claim 4, said tire (10) is for passenger vehicles.

6. The tire according to claim 4, said tire (10) is for trucks and busses.

7. The tire according to claim 4, said tire (10) is for construction vehicles.

## Patentansprüche

1. Reifenverstärkungselement (1), das Folgendes umfasst:
mindestens eine Kernmaterial-Kordlage (2) und
eine spiralige Kordlage (3), die Verstärkungskords (3a) aufweist, die spiralförmig auf die Kernmaterial-Kordlage (2) gewickelt sind, wobei
Verstärkungskords in der Kernmaterial-Kordlage (2) Metallkords (2a) sind, die einen Neigungswinkel von 40° bis 90° in Bezug auf die Längsrichtung der Kernmaterial-Kordlage (2) aufweisen, und
die Verstärkungskords (3a) in der spiraligen Kordlage (3) Kords aus organischer Faser sind, die einen Modul von nicht weniger als 19 GPa aufweisen,
wobei die Entfernung (L) zwischen einem Metallkord (2a) an einem Ende der Kernmaterial-Kordlage (2) in der Breitenrichtung und einem Verstärkungskord (3a) an einem Ende der spiraligen Kordlage (3) in der Breitenrichtung das 0,2- bis 20-Fache des Durchmessers der Metallkords (2a) der Kernmaterial-Kordlage (2) beträgt und
wobei der Modul ein Wert des anfänglichen Zugmoduls, gemessen gemäß JIS L1013 bei einer Prüftemperatur von 25°C, einer Geschwindigkeit von 30 cm/min und einem Spannfutterabstand von 250 mm, ist.

2. Reifenverstärkungselement nach Anspruch 1, wobei die Kords (3a) aus organischer Faser einen Neigungswinkel von 10° bis 45° in Bezug auf die Längsrichtung der Kernmaterial-Kordlage (2) aufweisen.

3. Reifenverstärkungselement nach Anspruch 1, wobei die Verstärkungskords (2a) der Kernmaterial-Kordlage (2) einen Neigungswinkel von 50° bis 90° aufweisen.

4. Reifen (10), der das Reifenverstärkungselement (1) nach Anspruch 1 umfasst.

5. Reifen nach Anspruch 4, wobei der Reifen (10) für Personenkraftwagen ist.

6. Reifen nach Anspruch 4, wobei der Reifen (10) für Lastkraftwagen und Busse ist.

7. Reifen nach Anspruch 4, wobei der Reifen (10) für Baufahrzeuge ist.

## Revendications

1. Elément de renforcement de bandage pneumatique (1), comprenant :
au moins une couche de câblés de matériau de noyau (2); et
une couche de câblés en spirale (3) comportant des câblés de renforcement (3a) enroulés en spirale sur ladite couche de câblés de matériau de noyau (2), dans lequel;
des câblés de renforcement dans ladite couche de câblés de matériau de noyau (2) sont des câblés métalliques (2a) formant un angle d'inclinaison de 40° à 90° par rapport à la direction longitudinale de ladite couche de câblés de noyau (2); et
lesdits câblés de renforcement (3a) dans ladite couche de câblés en spirale (3) sont des câblés de fibres organiques ayant un module non inférieur à 19 GPa;
dans lequel la distance (L) entre un câblé métallique (2a) au niveau d'un extrémité dans la direction de la largeur de ladite couche de câblés de matériau de noyau (2) et un câblé de renforcement (3a) au niveau d'une extrémité dans la direction de la largeur de ladite couche de câblés en spirale (3) représente 0,2 à 20 fois le diamètre desdits câblés métalliques (2a) de ladite couche de câblés de matériau de noyau (2); et
dans lequel le module est une valeur du module de traction initiale mesurée selon la norme JIS L1013 en présence d'une température d'essai de 25°C, d'une vitesse de 30 cm/minute et d'une distance de mandrin de 250 mm.

2. Élément de renforcement de bandage pneumatique selon la revendication 1, dans lequel lesdits câblés de fibres organiques (3a) forment un angle d'inclinaison de 10° à 45° par rapport à la direction longitudinale de ladite couche de câblés de matériau de noyau (2).

3. Elément de renforcement de bandage pneumatique selon la revendication 1, dans lequel lesdits câblés de renforcement (2a) de ladite couche de câblés de matériau de noyau (2) forment un angle d'inclinaison de 50° à 90°.

4. Bandage pneumatique (10), comprenant l'élément de renforcement du bandage pneumatique (1) selon la revendication 1.

5. Bandage pneumatique selon la revendication 4, ledit bandage pneumatique (10) étant destiné à des véhicules de tourisme.

6. Bandage pneumatique selon la revendication 4, ledit bandage pneumatique (10) étant destiné à des camions et des bus.

7. Bandage pneumatique selon la revendication 4, ledit bandage pneumatique (10) étant destiné à des engins de construction.
